# EUROPÄISCHE PATENTSCHRIFT

(11) **EP 2 999 884 B1**
(45) Veröffentlichungstag und Bekanntmachung des Hinweises auf die Patenterteilung: **03.01.2018**
(21) Anmeldenummer: 14724320.8
(22) Anmeldetag: 15.05.2014
(51) Int. Cl.: F04B 1/20

(54) **AXIALKOLBENPUMPE**
AXIAL PISTON PUMP
POMPE À PISTON AXIAL

(30) Priorität: 22.05.2013 DE 102013008676; 22.05.2013 DE 102013008681; 22.05.2013 DE 102013008629; 22.05.2013 DE 102013008679; 22.05.2013 DE 102013008678; 22.05.2013 DE 102013008677
(43) Veröffentlichungstag der Anmeldung: 30.03.2016
(73) Patentinhaber: Hydac Drive Center GmbH, 89129 Langenau (DE)
(72) Erfinder: KRONPASS, Manuel, 94104 Tittling (DE)
(74) Vertreter: Bartels, Martin Erich Arthur
(86) Internationale Anmeldenummer: PCT/EP2014/001323
(87) Internationale Veröffentlichungsnummer: WO 2014/187546

(56) Entgegenhaltungen:
- EP-A1- 0 320 822
- EP-A2- 1 293 668
- DE-A1- 10 044 784
- DE-C1- 4 415 510

## Beschreibung

Die Erfindung betrifft eine Axialkolbenpumpe, insbesondere für Hydrauliksysteme, mit den Merkmalen im Oberbegriff von Anspruch 1.

Axialkolbenpumpen dieser Gattung sind Stand der Technik. Sie finden verbreitet Einsatz für die Druckmittelversorgung von Verbrauchern wie Arbeitszylindern, Hydromotoren und dergleichen. Axialkolbenpumpen der eingangs genannten Gattung, bei denen die Schrägscheibe in ihrer Neigung gegenüber der Achse verstellbar sind, zeichnen sich gegenüber ebenfalls bekannten Axialkolbenpumpen mit feststehender Schrägscheibe durch eine bessere Energiebilanz im Betrieb aus. Während Pumpen mit feststehender Schrägscheibe als Konstantpumpe bei vorgegebener Antriebsdrehzahl stets einen konstanten Volumenstrom des Fluids fördern, auch wenn keine Energie von druckmittelbetätigten Aggregaten angefordert wird und daher auch im Leerlauf die Strömungswiderstände im Hydraulikkreislauf überwunden werden müssen, wofür Antriebsenergie aufgewendet wird, die keine Nutzenergie liefert, ist durch die Verstellmöglichkeit der Schrägscheibenneigung das Fördervolumen auf Null einstellbar und der Bedarf an Antriebsenergie minimierbar. Eine Axialkolbenpumpe dieser Art ist in dem Dokument DE 44 15 510 C1 offenbart. Aufgrund der aufeinanderfolgenden Hubbewegungen, die die Kolben im Betrieb ausführen, ist der erzeugte Druck nicht frei von Druckpulsationen, selbst wenn in der Zylindertrommel eine größere Anzahl von Kolben-Zylinder-Einheiten untergebracht ist. In manchen Fällen ist es beim Einsatz derartiger Pumpen daher erforderlich, Maßnahmen zur Glättung von Druckpulsationen vorzusehen, beispielsweise in Form von Pulsationsdämpfern.

Die EP 0 320 822 A1 beschreibt eine Axialkolbenpumpe, insbesondere für Hydrauliksysteme, mit einer in einem Pumpengehäuse um eine Achse rotierend antreibbaren Zylindertrommel, in der Kolben-Zylinder-Einheiten auf einem Kreis versetzt angeordnet sind, wobei die Kolben sich mit ihrem außerhalb der Zylindertrommel zugänglichen Betätigungsende zumindest mittelbar an einer Schrägscheibe abstützen, wobei zwischen den Hubräumen der Kolben-Zylinder-Einheiten und einem stationären Fluidzufluss und einem stationären Fluidabfluss der Anschlussplatte eine Steuereinrichtung angeordnet ist, die Fluidkanäle zur gezielten Überleitung von Fluid vom Fluidzufluss in die Hubräume und von den Hubräumen zum Fluidabfluss aufweist, wobei in der Steuereinrichtung zwischen den Fluidkanälen zumindest ein Druckausgleichskanal zum gezielten Aufbauen oder Ablassen von Fluiddruck in den Hubräumen vorgesehen ist, und wobei ein zweiter Druckausgleichskanal vorgesehen ist, mittels dessen jeweils nur ein Hubraum mit einer Drucksenke verbindbar ist.

Im Hinblick auf diese Problematik stellt sich die Erfindung die Aufgabe, eine Axialkolbenpumpe zur Verfügung zu stellen, die sich durch einen vergleichsweise glatteren Druckverlauf auszeichnet.

Erfindungsgemäß ist diese Aufgabe durch eine Axialkolbenpumpe gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass der zweite Druckausgleichskanal so angeordnet ist, dass die Verbindung von ihm zum jeweiligen Hubraum erst schließbar ist, nachdem die Verbindung vom Fluidzufluss zu diesem Hubraum hergestellt ist.

Es ist ferner vorgesehen, dass in der Steuereinrichtung zwischen den Fluidkanälen zumindest ein Druckausgleichskanal zum gezielten Aufbauen oder Ablassen von Fluiddruck in den Hubräumen vorgesehen ist. Dadurch eröffnet sich die Möglichkeit, Druckstöße beim Überlaufen der Steuerkanten zwischen Zylindern und den druckseitigen und saugseitigen Fluidkanälen dadurch zu minimieren, dass vor Erreichen eines druckseitigen Fluidkanals ein entsprechender Druckaufbau über einen Druckausgleichskanal oder vor Erreichen eines saugseitigen Fluidkanals ein Druckabbau über einen Ausgleichskanal eingeleitet wird. Insbesondere erfolgt dadurch der Druckaufbau im Bereich der Umsteuerung von Saugseite zu Druckseite sanfter.

Vorzugsweise ist die Anordnung hierbei so getroffen, dass durch den jeweiligen Druckausgleichskanal jeweils nur ein Hubraum mit einer Hochdruckquelle verbindbar ist, bei der es sich beispielsweise um zumindest eine Kompressionskammer handeln kann. Eine derartige Kammer kann beispielsweise in das Gehäuseunterteil des Pumpengehäuses integriert sein, mit dem die Fluidkanäle aufweisende Steuereinrichtung verbunden ist.

Mit besonderem Vorteil kann der jeweilige Druckausgleichskanal so angeordnet sein, dass die Verbindung zum jeweiligen Hubraum erst herstellbar ist, nachdem die Verbindung vom Fluidzufluss zu diesem Hubraum geschlossen ist.

Weiterhin kann der Druckausgleichskanal so angeordnet sein, dass die Verbindung von ihm zum jeweiligen Hubraum erst schließbar ist, nachdem die Verbindung vom Fluidabfluss zu diesem Hubraum hergestellt ist.

Bei der Drucksenke kann es sich um einen Tank handeln, der Bestandteil eines zugehörigen Leckölsystems ist.

Der zur Drucksenke führende Druckausgleichskanal kann so angeordnet sein, dass die Verbindung von ihm zum jeweiligen Hubraum erst herstellbar ist, nachdem die Verbindung vom Fluidabfluss zu diesem Hubraum geschlossen ist.

Hinsichtlich der Anordnung dieses zweiten Druckausgleichskanals kann die Anordnung so getroffen sein, dass die Verbindung von ihm zum jeweiligen Hubraum erst herstellbar ist, nachdem die Verbindung vom Fluidabfluss zu diesem Hubraum geschlossen ist.

Bei besonders bevorzugten Ausführungsbeispielen weist die Steuereinrichtung eine stationäre Steuerscheibe auf, welche vorzugsweise einen Boden für die Hubräume der rotierenden Kolben-Zylinder-Einheiten bildet, wobei die Steuerscheibe weiter bevorzugt nierenförmige Fluidkanäle zur Herstellung von Verbindungen zu den Kolben-Zylinder-Einheiten aufweist.

Bei derartigen Ausführungsbeispielen ist zumindest ein Druckausgleichskanal in Form einer Bohrung in der Steuerscheibe vorgesehen.

Die Steuerscheibe kann an einer am Gehäuseunterteil des Pumpengehäuses ausgebildeten Anschlussplatte angeordnet sein, wobei die jeweilige Kompressionskammer in der Anschlussplatte vorgesehen ist und ein Verbindungskanal von der Kompressionskammer zum zugeordneten Druckausgleichskanal vorgesehen ist.

Vorzugsweise ist die jeweilige Kompressionskammer durch eine Verschlussschraube verschlossen.

Nachstehend ist die Erfindung anhand der Zeichnung im Einzelnen erläutert. Es zeigen:
- Fig. 1: einen Längsschnitt einer Axialkolbenpumpe gemäß einem Ausführungsbeispiel der Erfindung;
- Fig. 2: eine teilweise aufgeschnittene perspektivische Schrägansicht des Gehäuseunterteils des Ausführungsbeispiels von Fig. 1, gesehen auf die an der Anschlussplatte des Gehäuseunterteils festgelegte Steuerscheibe;
- Fig. 3: eine perspektivische Schrägansicht der gesondert dargestellten Steuerscheibe; und
- Fig. 4 bis 6: schematisierte Funktionsskizzen zur Verdeutlichung der Betriebsweise der erfindungsgemäßen Axialkolbenpumpe.

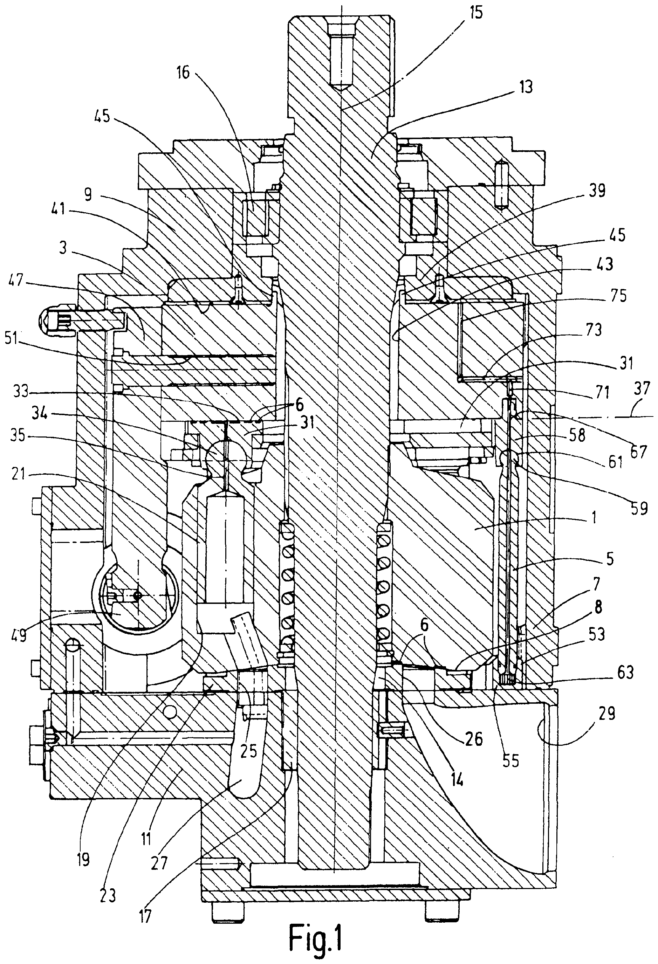

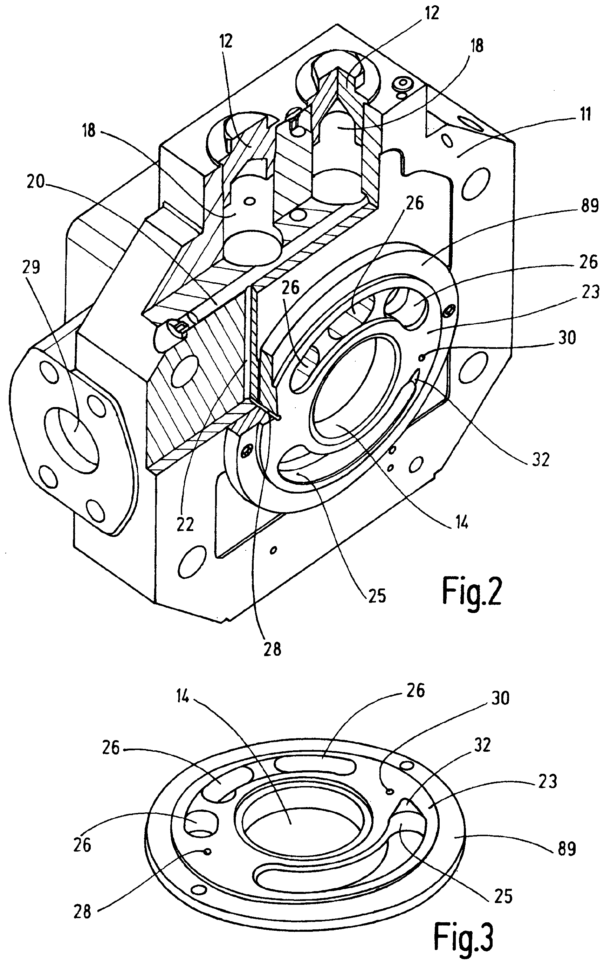

Die Fig. 1 zeigt ein Ausführungsbeispiel der erfindungsgemäßen Axialkolbenpumpe in Schrägscheibenbauart. In der bei Axialkolbenpumpen dieser Art üblichen Weise ist in einem Pumpengehäuse 7 eine rotierend antreibbare Zylindertrommel 1 vorgesehen, der eine Schrägscheibe 3 zugeordnet ist, die zur Einstellung der Förderleistung und damit des durch die Pumpe erzeugbaren Systemdrucks schwenkbar ist, wobei die Schwenkachse der Schrägscheibe 3 in Fig. 1 mit 37 bezeichnet ist. Das Pumpengehäuse 7 weist ein in der Zeichnung oben liegendes Oberteil 9 und ein Unterteil 11 auf. Eine Antriebswelle 13 für die Zylindertrommel 1 ist für die Drehbewegung um die mit 15 bezeichnete Achse im Oberteil 9 in einem Kegelrollenlager 16 und im unteren Teil 11 mittels eines Gleitlagers 17 gelagert. Die Zylinderräume 19 der Zylindertrommel 1 mit darin geführten Kolben 21 (in der Schnittebene von Fig. 1 ist lediglich ein Zylinderraum 19 sichtbar) sind am in der Zeichnung unteren Zylinderende mit einem Steuerspiegel 23 in Kontakt, der am Gehäuseunterteil 11 anliegt. Der Steuerspiegel 23 weist Steueröffnungen von Fluidkanälen 25 und 26 für Verbindungen zwischen einem saugseitigen Anschluss 27 und einem druckseitigen Anschluss 29 in die Zylinderräume 19 der Zylindertrommel 1 auf. Der Steuerspiegel 23, der in der Fig. 2 gesondert dargestellt ist, weist auf der in der Zeichnung oben liegenden Seite, die der Zylindertrommel 1 zugewandt ist, eine Beschichtung 24, siehe Fig. 2, auf, die die Lagerfläche bildet, an der die leicht konkav gewölbte Bodenfläche 8 der Zylindertrommel 1 bei deren Drehbewegung gleitet. In Fig. 1 sind Teile der Beschichtung 24, die Lagerstellen zwischen einem zentralen Durchgang 14 und angrenzenden Steueröffnungen von Fluidkanälen 25 und 26 bilden, mit 6 bezeichnet.

Bei der Bewegung der Zylindertrommel 1 gleiten die Kolben 21 über jeweils einen Gleitschuh 31 an der Gleitfläche 33, die sich an der Unterseite der Schrägscheibe 3 befindet. Die Gleitschuhe 31 sind mit der Kolbenoberseite des zugehörigen Kolbens 21 kugelgelenkartig verbunden, wobei das Kugelgelenk durch einen Kugelkopf 34 am Kolben 21 und eine Kugelpfanne 36 im Gleitschuh 31 gebildet ist. Das Kugelgelenk ist durch eine Einbördelung 38 am Gleitschuh 31 gesichert. Ölbohrungen 35 im Kugelkopf 34 und Gleitschuh 31 bilden einen Zugang für Fluid wie Hydrauliköl für die Schmierung der Gleitfläche 33. In Entsprechung zu dem Steuerspiegel 23 weisen auch die Gleitschuhe 31 eine Beschichtung 24 auf.

Wie bereits erwähnt, ist für die Einstellung des Fördervolumens die Schrägscheibe 3 um die Schwenkachse 37 verstellbar, die in der Ebene der Gleitfläche 33 der Schrägscheibe 3 liegt. Definiert ist diese Schwenkachse 37 durch die zwischen Schrägscheibe 3 und Oberteil 9 gebildete Schrägscheibenlagerung. Diese weist am Oberteil 9 eine Kunststofflagerschale 39 auf, an der die Schrägscheibe 3 mit einer kalottenförmigen Gleitfläche 41 geführt ist. In der Gleitfläche 41 ist für den Durchtritt der Antriebswelle 13 eine sich nach oben konisch erweiternde Durchgangsöffnung 43 in der Schrägscheibe 3 gebildet. Beidseits neben der Öffnung 43 sind aus der Gleitfläche 41 vorstehende Führungsschienen 45 als Teil der Schrägscheibenlagerung vorgesehen. Für die Schwenkbewegung der Schrägscheibe 3 um die Schwenkachse 37 ist die in Fig. 1 links gelegene Seite der Schrägscheibe 3 mit einem Schwenkhebel 47 verschraubt, der sich parallel zur Achse 15 neben der Zylindertrommel 1 erstreckt und an seinem in Fig. 1 unteren Ende 49 in senkrecht zur Zeichnungsebene verlaufender Richtung bewegbar ist, um eine entsprechende Schwenkbewegung der Schrägscheibe 3 um die Schwenkachse 37 zu bewirken. Der Schwenkhebel 47 ist an der zugeordneten Seite der Schrägscheibe 3 mit einem in einer Bohrung 51 befindlichen Innengewinde verschraubt.

Ein Gelenkrohr 5, das Bestandteil einer Zufuhr- und Andrückeinrichtung bildet, ist, wie Fig. 1 zeigt, seitlich neben der Zylindertrommel 1 in parallel zur Achse 15 verlaufender Richtung angeordnet. Mit seinem in Fig. 1 unteren Ende ist das Gelenkrohr 5 in einer Aufnahme 53 in einem Anschlussblock 55 am Gehäuseunterteil 11 gelagert, wobei die Aufnahme 53 eine Axialverschiebung des Gelenkrohres 5 ermöglicht. Der Block 55 enthält einen in Fig. 1 nicht sichtbaren Verbindungskanal zur Druckseite 29, der in die Aufnahme 53 des Gelenkrohres 5 einmündet. Das obere Ende des Gelenkrohres 5 ist über ein Verbindungsstück 58, das seitlich außerhalb der Gleitfläche 33 an der Unterseite der Schrägscheibe 3 angeordnet ist, mit der Schrägscheibe 3 gelenkig verbunden. Die Gelenkverbindung ist durch eine Art Kugelgelenk realisiert und weist am oberen Ende des Gelenkrohres 5 einen Kugelkopf 59 auf, der in einer Kugelpfanne 61 des Verbindungsstückes 58 aufgenommen ist. Das Gelenkrohr 5 ist über das Verbindungsstück 58 gegen die Schrägscheibe 3 hin verspannt. Zu diesem Zweck ist zwischen dem unteren Ende des Gelenkrohres 5 und dem Boden der Aufnahme 53 ein Tellerfederpaket 63 angeordnet. Ein Fluiddurchgang 67 im Verbindungsstück 58 setzt die Fluidverbindung zur Druckseite 29 über die Rohrmündung am Kugelkopf 59 hinaus zur Schrägscheibe 3 fort. An den Durchgang 67 des Verbindungsstückes 58 schließen sich innerhalb der Schrägscheibe 3 ausgebildete Schmierkanäle 73, 75 an, von denen in Fig. 1 lediglich einige sichtbar sind und von denen die vertikalen Kanäle 75 an für die Schmierstoffzufuhr zur Schwenkscheibenlagerung in Frage kommenden Stellen der Gleitfläche 41 münden.

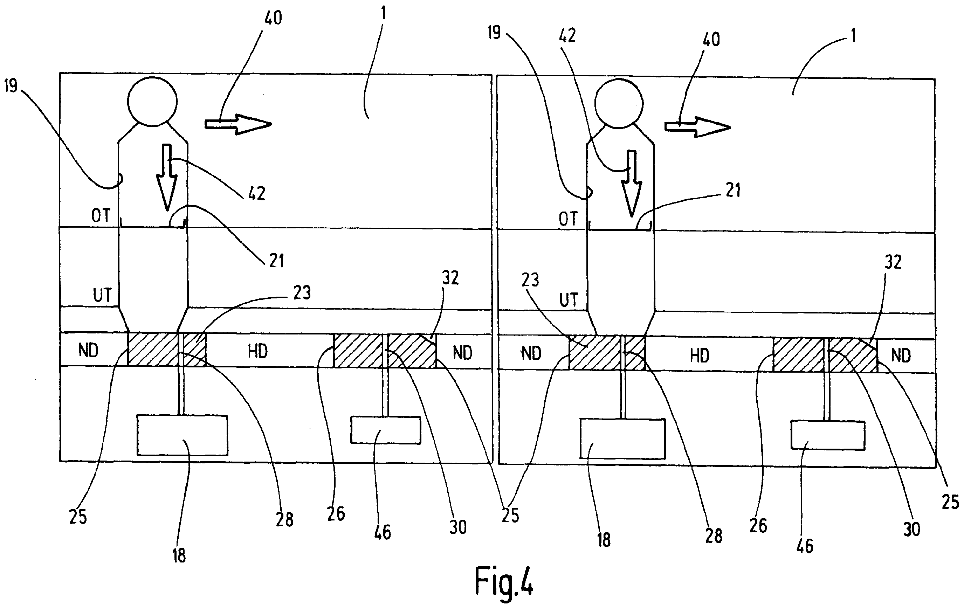

Die Fig. 2 zeigt das Gehäuseunterteil 11 in einer Orientierung, bei der die an der Oberseite angebrachte Steuerscheibe 23 und der seitliche Anschluss der Druckseite 29 sichtbar sind. An der in Fig. 2 obenliegenden Seite des Gehäuseunterteils 11 sind zwei in die Gehäusewand integrierte, zylindrische Kompressionskammern 18 vorgesehen, die mit Verschlussschrauben 12 geschlossen und an ihrem inneren Ende mit Verbindungsbohrungen 20 und 22 in Verbindung sind. In letztere mündet ein Druckausgleichskanal 28 in Form einer engen Kompressionskammerbohrung, die in der Steuerscheibe 23 ausgebildet ist. Der Kompressionskammerbohrung 28 in etwa gegenüberliegend ist in der Steuerscheibe 23 ein weiterer Druckausgleichskanal 30 in Form einer Entlastungsbohrung gebildet, die ebenfalls einen geringen Querschnitt besitzt. An dem der Entlastungsbohrung 30 benachbarten Ende des nierenförmigen Fluidkanals 25, der der Niederdruck- oder Saugseite 27 zugeordnet ist, weist der Öffnungsrand eine Abflachung auf, die eine Steuerkerbe 32 bildet. Auf die Funktion der Kompressionskammerbohrung 28, der Entlastungsbohrung 30 und der Steuerkerbe 32 wird nachstehend unter Bezug auf die Fig. 4 bis 6 näher eingegangen.

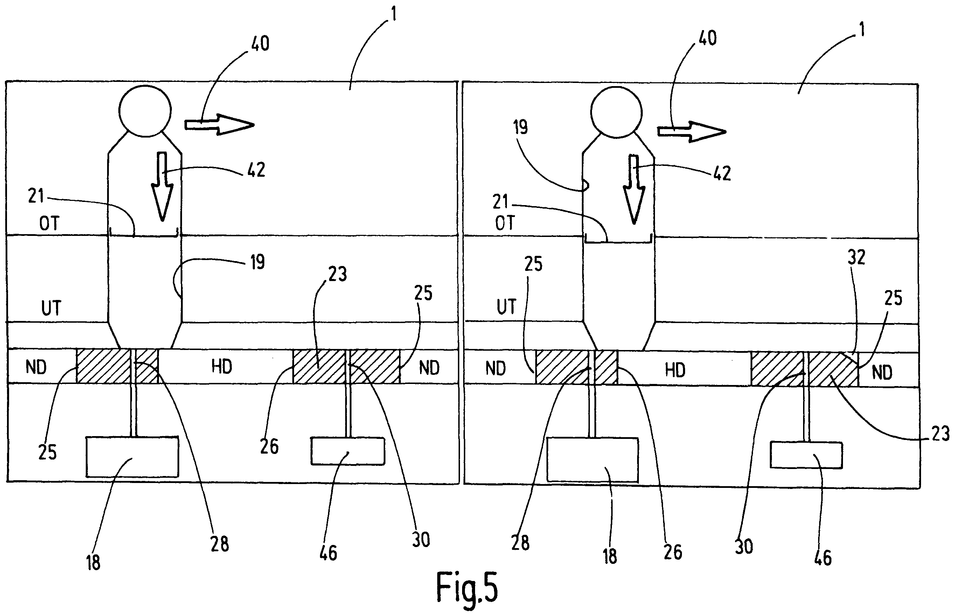

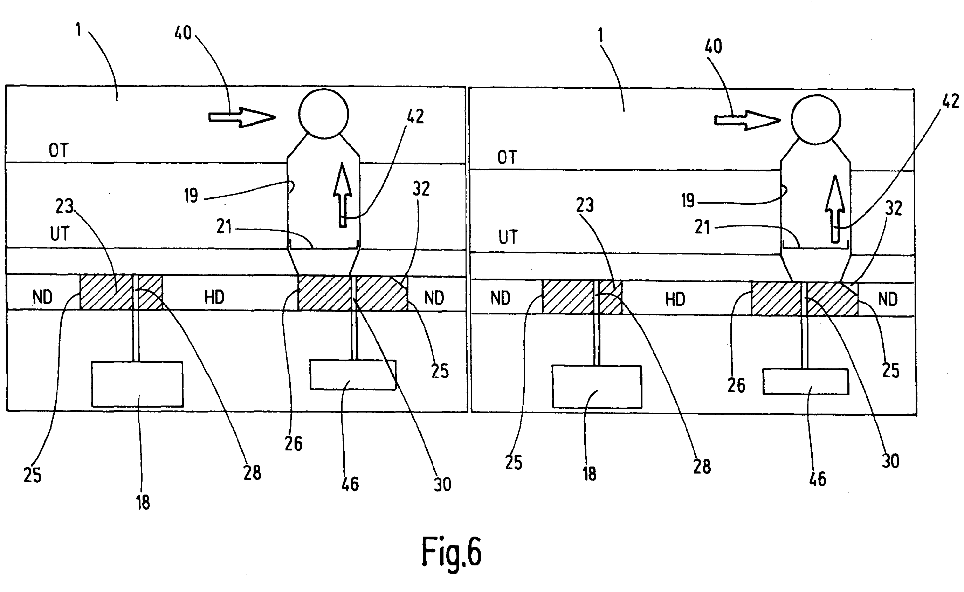

Die Fig. 4 bis 6 zeigen in der Art eines Funktionsschemas mit in Abwicklung dargestellter Steuerscheibe 23 den Arbeitszyklus für einen Einzelzylinder 19 der Zylindertrommel 1, wobei die Drehrichtung mit Pfeilen 40 und die Richtung des Kolbenhubs mit Pfeilen 42 bezeichnet ist. Oberer Totpunkt und unterer Totpunkt sind mit OT bzw. UT bezeichnet. Entsprechend der mit 40 angegebenen Drehrichtung zeigt die Fig. 4 einen Ablauf, bei dem, bei im oberen Totpunkt befindlichem Kolben 21, nach Ende eines Saugvorgangs, die Verbindung zum Fluidkanal 25 der Niederdruckseite schließt und sodann, siehe linke Seite der Fig. 4, die Kompressionskammerbohrung 28 öffnet. Dadurch beginnt ein Druckaufbau im Volumen des Zylinders 19 durch Speisung aus der Kompressionskammer 18 noch bevor die Verbindung zum hochdruckseitigen Fluidkanal 26 öffnet. Dieser Zustand nach Beendigung des Saughubes des Kolbens 21 ist in Fig. 5 linksseitig dargestellt, wobei die Verbindung zum hochdruckseitigen Fluidkanal 26 nunmehr geöffnet ist, während gleichzeitig die Kompressionskammer 18 noch über die Kompressionskammerbohrung 28 mit dem Zylinder 19 verbunden ist, so dass nunmehr die Kompressionskammer 18 vom druckseitigen Fluidkanal 26 her aufgeladen wird. Im weiteren Fortschritt des Arbeitsspiels, wie in Fig. 5 rechtsseitig dargestellt, erfolgt der Förderhub des Kolbens 21, während die Verbindung zur Kompressionskammer 18 über die Kompressionskammerbohrung 28 bereits unterbunden ist. Fig. 6 zeigt linksseitig die Situation, bei der zu Beginn eines Saughubes des Kolbens 21 die Verbindung über die Entlastungsbohrung 30 zu einem als Drucksenke dienenden Tank 46 beginnt zu öffnen. Dadurch erfolgt ein Abbau von Restdruck aus dem Zylinder 19, bevor es zur Verbindung mit dem niederdruckseitigen Fluidkanal 25 kommt, wie es in Fig. 6 rechtsseitig dargestellt ist. Genauer gesagt erfolgt die Verbindung mit dem niederdruckseitigen Fluidkanal 25 nicht plötzlich am vollen Querschnitt des Fluidkanals 25, sondern, wie in Fig. 6 rechtsseitig gezeigt, sanft an der Steuerkerbe 32.

Durch die Verbindung mit der Kompressionskammer 18 wird der Druck im Zylinder 19 von "Saugdruck" nach "Arbeitsdruck" angehoben, bevor die Öffnung des hochdruckseitigen Fluidkanals 26 erreicht wird. Hierfür wird Druck aus der Kompressionskammer 18 geholt. Nach Erreichen der Verbindung mit dem hochdruckseitigen Fluidkanal 26 ist dieser über das Zylindervolumen und die Kompressionskammerbohrung 28 mit der Kompressionskammer 18 verbunden, so dass der Druck in der Kompressionskammer 18 wieder auf den vorhandenen Arbeitsdruck angehoben wird, bevor der nächste Kolben 21 in den Umsteuerbereich gelangt. In Verbindung mit dem mittels der Steuerkerbe 32 erreichten sanften Übergang und der zuvor bewirkten Druckentlastung über die Entlastungsbohrung 30, siehe die in Fig. 6 linksseitig dargestellte Situation, ergibt sich insgesamt ein optimiertes Betriebsverhalten mit einem Mindestmaß an Druckpulsationen.

## Patentansprüche

1. Axialkolbenpumpe, insbesondere für Hydrauliksysteme, mit einer in einem Pumpengehäuse (7) um eine Achse (15) rotierend antreibbaren Zylindertrommel (1), in der Kolben-Zylinder-Einheiten auf einem Kreis versetzt angeordnet sind, wobei die Kolben (21) sich mit ihrem außerhalb der Zylindertrommel (1) zugänglichen Betätigungsende (31) zumindest mittelbar an einer Schrägscheibe (3) abstützen, wobei zwischen den Hubräumen (19) der Kolben-Zylinder-Einheiten und einem stationären Fluidzufluss und einem stationären Fluidabfluss einer Anschlussplatte (11) eine Steuereinrichtung (23) angeordnet ist, die Fluidkanäle (25, 26) zur gezielten Überleitung von Fluid vom Fluidzufluss in die Hubräume (19) und von den Hubräumen (19) zum Fluidabfluss aufweist, wobei in der Steuereinrichtung (23) zwischen den Fluidkanälen (25, 26) ein erster Druckausgleichskanal (28) zum gezielten Aufbauen oder Ablassen von Fluiddruck in den Hubräumen (19) vorgesehen ist, und wobei ein zweiter Druckausgleichskanal (30) vorgesehen ist, mittels dessen jeweils nur ein Hubraum (19) mit einer Drucksenke (46) verbindbar ist, **dadurch gekennzeichnet, dass** der zweite Druckausgleichskanal (30) so angeordnet ist, dass die Verbindung von ihm zum jeweiligen Hubraum (19) erst schließbar ist, nachdem die Verbindung vom Fluidzufluss (25) zu diesem Hubraum (19) hergestellt ist.

2. Axialkolbenpumpe nach Anspruch 1, **dadurch gekennzeichnet, dass** durch den ersten Druckausgleichskanal (28) jeweils nur ein Hubraum (19) mit einer Hochdruckquelle (18) verbindbar ist.

3. Axialkolbenpumpe nach Anspruch 1 oder 2, **dadurch gekennzeichnet, dass** die Hochdruckquelle zumindest eine Kompressionskammer (18) ist.

4. Axialkolbenpumpe nach einem der vorstehenden Ansprüche, **dadurch gekennzeichnet, dass** der erste Druckausgleichskanal (28) so angeordnet ist, dass die Verbindung zum jeweiligen Hubraum (19) erst herstellbar ist, nachdem die Verbindung vom Fluidzufluss (25) zu diesem Hubraum (19) geschlossen ist.

5. Axialkolbenpumpe nach einem der vorstehenden Ansprüche, **dadurch gekennzeichnet, dass** der erste Druckausgleichskanal (28) so angeordnet ist, dass die Verbindung von ihm zum jeweiligen Hubraum (19) erst schließbar ist, nachdem die Verbindung vom Fluidabfluss (26) zu diesem Hubraum (19) hergestellt ist.

6. Axialkolbenpumpe nach einem der vorstehenden Ansprüche, **dadurch gekennzeichnet, dass** die Drucksenke ein Tank (46) ist.

7. Axialkolbenpumpe nach einem der vorstehenden Ansprüche, **dadurch gekennzeichnet, dass** der zweite Druckausgleichskanal (30) so angeordnet ist, dass die Verbindung von ihm zum jeweiligen Hubraum (19) erst herstellbar ist, nachdem die Verbindung vom Fluidabfluss (26) zu diesem Hubraum (19) geschlossen ist.

8. Axialkolbenpumpe nach einem der vorstehenden Ansprüche, **dadurch gekennzeichnet, dass** die Steuereinrichtung eine stationäre Steuerscheibe (23) ist, welche vorzugsweise einen Boden für die Hubräume (19) der rotierenden Kolben-Zylinder-Einheiten (1) bildet, und dass die Steuerscheibe (23) weiter bevorzugt nierenförmige Fluidkanäle (25, 26) zur Bildung von Verbindungen zu den Kolben-Zylinder-Einheiten (1) aufweist.

9. Axialkolbenpumpe nach einem der vorstehenden Ansprüche, **dadurch gekennzeichnet, dass** der erste und der zweite Druckausgleichskanal in Form einer Bohrung (28, 30) in der Steuerscheibe (23) vorgesehen ist.

10. Axialkolbenpumpe nach einem der vorstehenden Ansprüche, **dadurch gekennzeichnet, dass** die Steuerscheibe (23) an der Anschlussplatte (11) des Gehäuses (7) angeordnet ist, wobei die jeweilige Kompressionskammer (18) in der Anschlussplatte (11) vorgesehen ist und ein Verbindungskanal (20, 22) von der Kompressionskammer (18) zum zugeordneten Druckausgleichskanal (28) vorgesehen ist.

11. Axialkolbenpumpe nach Anspruch 3, **dadurch gekennzeichnet, dass** die zumindest eine Kompressionskammer (18) durch eine Verschlussschraube (12) verschlossen ist.

## Claims

1. An axial piston pump, in particular for hydraulic systems, comprising a cylinder drum (1) that can be driven rotatably about an axis (15) in a pump housing (7), in which cylinder drum piston/cylinder units are arranged offset on a circle, the pistons (21) being supported at least indirectly against a swashplate (3) with their actuation end (31) accessible outside of the cylinder drum (1), there being disposed between the displacement spaces (19) of the piston/cylinder units and a stationary fluid inflow and a stationary fluid outflow of a connection plate (11) a control device (23) which has fluid channels (25, 26) for the targeted conveyance of fluid from the fluid inflow into the displacement spaces (19) and from the displacement spaces (19) to the fluid outflow, there being provided in the control device (23) between the fluid channels (25, 26) a first pressure equalisation channel (28) for the targeted build-up or relief of fluid pressure in the displacement spaces (19), and a second pressure equalisation channel (30) being provided by means of which in each case only one displacement space (19) can be connected to a pressure sink (46), **characterised in that** the second pressure equalisation channel (30) is positioned such that the connection from the latter to the respective displacement space (19) can only be closed after the connection from the fluid inflow (25) to this displacement space (19) has been established.

2. The axial piston pump according to Claim 1, **characterised in that** by means of the first pressure equalisation channel (28), only one displacement space (19) can in each case be connected to a high pressure source (18).

3. The axial piston pump according to Claim 1 or 2, **characterised in that** the high pressure source is at least one compression chamber (18).

4. The axial piston pump according to any of the preceding claims, **characterised in that** the first pressure equalisation channel (28) is positioned such that the connection to the respective displacement space (19) can only be established after the connection from the fluid inflow (25) to this displacement space (19) has been closed.

5. The axial piston pump according to any of the preceding claims, **characterised in that** the first pressure equalisation channel (28) is positioned so that the connection from it to the respective displacement space (19) can only be closed after the connection from the fluid outflow (26) to this displacement space (19) has been established.

6. The axial piston pump according to any of the preceding claims, **characterised in that** the pressure sink is a tank (46).

7. The axial piston pump according to any of the preceding claims, **characterised in that** the second pressure equalisation channel (30) is positioned such that the connection from it to the respective displacement space (19) can only be established after the connection from the fluid outflow (26) to this displacement space (19) has been closed.

8. The axial piston pump according to any of the preceding claims, **characterised in that** the control device is a stationary control disc (23) which preferably forms a base for the displacement spaces (19) of the rotating piston/cylinder units (1), and that the control disc (23) also preferably has kidney-shaped fluid channels (25, 26) for forming connections with the piston/cylinder units (1).

9. The axial piston pump according to any of the preceding claims, **characterised in that** the first and the second pressure equalisation channels are provided in the form of a hole (28, 30) in the control disc (23).

10. The axial piston pump according to any of the preceding claims, **characterised in that** the control disc (23) is located on the connection plate (11) of the housing (7), the respective compression chamber (18) being provided in the connection plate (11) and a connection channel (20, 22) from the compression chamber (18) to the assigned pressure equalisation channel (28) being provided.

11. The axial piston pump according to Claim 3, **characterised in that** the at least one compression chamber (18) is closed by a closure screw (12).

## Revendications

1. Pompe à piston axial, notamment pour des systèmes hydrauliques, comprenant un tambour (1) cylindrique, qui peut être entraîné en rotation autour d'un axe (15) dans un corps (7) de pompe et dans lequel sont disposées, de façon décalée sur un cercle, des unités piston-cylindre, les pistons (21) s'appuyant, par leur extrémité (31) d'actionnement accessible de l'extérieur du tambour (1) cylindrique, au moins indirectement sur un plateau (3) en biais, dans laquelle, entre les cylindrées (19) des unités de piston-cylindre et une entrée fixe de fluide et une sortie fixe de fluide d'un plateau (11) de raccord, est disposé un dispositif (23) de commande, qui a des conduits (25, 26) pour du fluide, pour faire passer, de manière ciblée, du fluide de l'entrée de fluide dans les cylindrées (19) et des cylindrées (19) à la sortie de fluide, dans laquelle il est prévu dans le dispositif (23) de commande, entre les conduits (25, 26) pour du fluide, un premier conduit (28) de compensation de la pression, pour établir ou détendre de manière ciblée la pression de fluide dans les cylindrées (19) et dans laquelle il est prévu un deuxième conduit (30) de compensation de la pression à l'aide duquel seulement une cylindrée (19) peut communiquer avec un puits (46) de pression, **caractérisée en ce que** le deuxième conduit (30) de compensation de la pression est disposé de manière à ce que sa communication avec la cylindrée (19) respective puisse être fermée seulement après que la communication de l'entrée (25) de fluide avec cette cylindrée (19) a été ménagée.

2. Pompe à piston axial suivant la revendication 1, **caractérisée en ce que**, par le premier conduit (28) de compensation de la pression, respectivement seulement une cylindrée (19) peut communiquer avec une source (18) de haute pression.

3. Pompe à piston axial suivant la revendication 1 ou 2, **caractérisée en ce que** la source de haute pression est au moins une chambre (18) de compression.

4. Pompe à piston axial suivant l'une des revendications précédentes, **caractérisée en ce que** le premier conduit (28) de compensation de la pression est disposé de manière à ce que la communication avec la cylindrée (19) respective puisse être ménagée seulement après que la communication de l'entrée (25) de fluide avec cette cylindrée (19) est fermée.

5. Pompe à piston axial suivant l'une des revendications précédentes, **caractérisée en ce que** le premier conduit (28) de compensation de la pression est disposé de manière à ce que sa communication avec la cylindrée (19) respective puisse être fermée seulement après que la communication de la sortie (26) de fluide avec cette cylindrée (19) est ménagée.

6. Pompe à piston axial suivant l'une des revendications précédentes, **caractérisée en ce que** le puits de pression est un réservoir (46).

7. Pompe à piston axial suivant l'une des revendications précédentes, **caractérisée en ce que** le deuxième conduit (30) de compensation de la pression est disposé de manière à ce que sa communication avec la cylindrée (19) respective puisse être ménagée seulement après que la communication de la sortie (26) de fluide avec cette cylindrée (19) est fermée.

8. Pompe à piston axial suivant l'une des revendications précédentes, **caractérisée en ce que** le dispositif de commande est un disque (23) fixe de commande, qui forme de préférence un fond des cylindrées (19) des unités (1) tournantes de piston-cylindre et **en ce que** le disque (23) de commande a en outre des conduits (25, 26) pour du fluide, de préférence réniformes, afin de former des liaisons avec les unités (1) de piston-cylindre.

9. Pompe à piston axial suivant l'une des revendications précédentes, **caractérisée en ce que** le premier et le deuxième conduits de compensation de la pression sont prévus sous la forme d'un trou (28, 30) dans le disque (23) de commande.

10. Pompe à piston axial suivant l'une des revendications précédentes, **caractérisée en ce que** le disque (23) de commande est disposé sur le plateau (11) de raccord du corps (7), la chambre (18) de compression respective étant prévue dans le plateau (11) de raccord, et il est prévu un conduit (20, 22) de liaison allant de la chambre (18) de compression au conduit (28) associé de compensation de la pression.

11. Pompe à piston axial suivant la revendication 3, **caractérisée en ce que** la au moins une chambre (18) de compression est fermée par une vis (12) de fermeture.
